# EUROPEAN PATENT APPLICATION

(11) **EP 1 977 983 A1**
(43) Date of publication of application: **08.10.2008**
(21) Application number: 08005887.8
(22) Date of filing: 27.03.2008
(51) Int. Cl.: B65G 17/32, B65B 41/14, B65H 20/16, F16G 13/18

(54) **Chain provided with pivots for conveying sheet material**

(30) Priority: 03.04.2007 IT MI20070682
(71) Applicant: Regina Catene Calibrate S.p.A., 20122 Milano (IT)
(72) Inventor: Garbagnati, Carlo, 23884 Castello Brianza LC (IT)
(74) Representative: Faraggiana, Vittorio

(57) **Abstract**

A chain for conveying sheet material comprises a sequence of chain links each formed of a pair of parallel plates (32-35) connected to the subsequent and preceding links by two respective transverse articulation pivots, the chain comprising grasping pivots (12) each having a fixed part (13), which is integral with the chain, and a movable part (14) that is supported on the fixed part and is provided with cam surfaces (17) intended for sliding on corresponding driving surfaces (26) arranged along the path of the chain to open the pivots against the action of spring means (23) that maintains the pivot in a normally shut position, the fixed part (13) of the pivot comprising a fixed jaw (18) and a pair of lateral guiding arms (15), between the lateral guiding arms (15) and the movable part (14) there being provided mutual engaging means (20, 21) that sets preset movement of the movable part (14) compared with the fixed part (13), said fixed jaw (18) and said guiding arms (15) of the fixed part of the pivot protruding as one piece laterally from one of the two plates (35) of a chain link. The chain comprises an additional plate (31) placed alongside the plate (35) from which there protrude a fixed jaw and guiding arms of the pivot, the additional plate (31) connecting the two transverse articulation pivots (37, 38) of the link that bears the pivot and in tandem with the plates (32) and (35) balances the resisting surfaces thereof, increasing the breaking and yield stress loads.

## Description

The present invention relates to a chain for conveying sheet material, suitable in particular for being used in a thermoforming machine. The invention also refers to a conveying device comprising such a chain and to a method for manufacturing the chain.

In the known art a roller chain is made that is provided with lateral pivots designed for grasping sheet material for conveying the sheet material along a preset path, like the one disclosed in United States patent US 4,826,065 and in European patent EP 0126878.

The chain is formed of a sequence of links, each of which comprises a pair of parallel plates connected to the plates of the adjacent links by two respective transverse articulation pivots.

The pivot comprises a fixed part formed as one piece with a plate of a link and a movable part that is mounted slidably on the fixed part of the pivot.

The fixed part of the pivot comprises a fixed jaw and a pair of lateral guiding arms that protrude as one piece from the plate of the pivot link. The guiding arms engage with the movable part of the pivot to guide the pivot in the opening and closing movement. The guide engagement is made, for example, with indentations formed for drawing in the guiding arms suitable for sliding in appropriate notches obtained on opposite sides of the movable part of the pivot.

The flat plates of the links and plates folded to form the fixed part of the pivots (fixed jaw and guiding arms) are made of heat-treated and nickel-plated carbon steel or series 400 martensitic stainless steel. The use of such materials is necessary in the known art to obtain a satisfactory chain breaking (and yield stress) load. In order to make the pivot-bearing plate and the draw of the guiding indentations of the movable part of the pivot, it is in fact necessary to start with material in a soft (and therefore deformable) state and subsequently heat-treat the material to increase the hardness thereof.

This type of heat-treated material nevertheless has low resistance to corrosion. This entails a significant drawback in numerous applications, such as, for example, in heat-forming machines, where washing cycles with corrosive agents are repeated at high frequency.

The general object of the present invention is to overcome the aforesaid drawbacks by providing a chain provided with pivots for conveying sheet material that has great mechanical resistance and simultaneously provides satisfactory resistance to corrosion.

A further object of the invention is to provide a chain for conveying sheet material that has a simple structure and is cheap and easy to manufacture.

In view of this object it has been decided to devise, according to the invention, a chain for conveying sheet material comprising a sequence of chain links, each formed of a pair of parallel plates connected to the subsequent and preceding links by two respective transverse articulation pivots, the chain comprising laterally grasping pivots each having a fixed part, which is integral with the chain, and a movable part that is supported on the fixed part and is provided with cam surfaces intended for sliding on corresponding driving surfaces arranged along the path of the chain to open the pivots against the action of spring means that maintains the pivot in a normally shut position, the fixed part of the pivot comprising a fixed jaw and a pair of lateral guiding arms, between the lateral guiding arms and the movable part there being provided mutual engaging means that sets preset movement of the movable part compared with the fixed part, said fixed jaw and said guiding arms of the fixed part of the pivot protruding as one piece laterally from one of the two plates of a chain link, characterised in that it comprises an additional plate next to each plate from which there protrude a fixed jaw and guiding arms of the pivot, the additional plate connecting the transverse articulation pivots of the plate alongside which it is placed.

In order to make clearer the explanation of the innovative principles of the present invention and the advantages thereof over the prior art a possible embodiment applying such principles will be disclosed below with the help of the attached drawings. In the drawings:
- figure 1 is a perspective view of a chain portion made according to the invention,
- figure 2 is a view of a chain link driven by a cog with the movable part of the pivot removed,
- figure 3 is a side view of the chain with the movable parts of the pivots removed,
- figure 4 is a section view of the chain according to the plane IV-IV shown in figure 3.

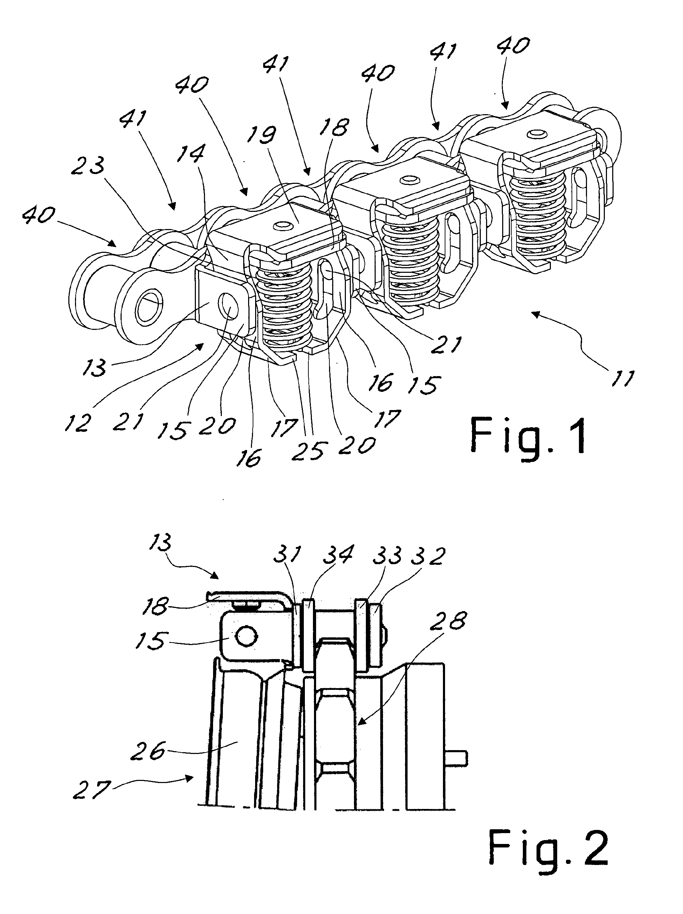

With reference to the figures, in figure 1 there is shown a chain 11 for conveying sheet material, to be used, for example, in a conveying device of a heat-forming machine.

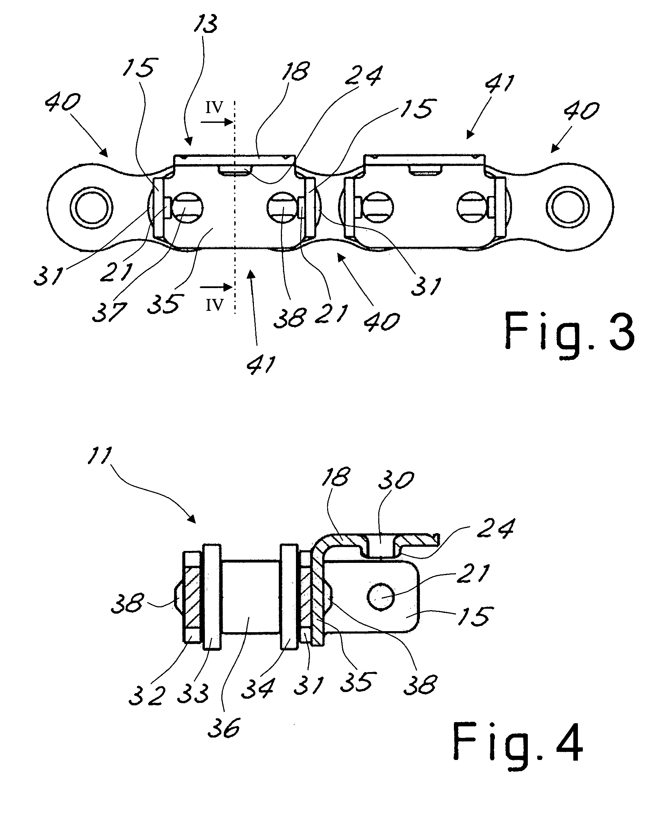

The chain is formed of a sequence of links 40-41, each of which comprises a pair of parallel plates connected to the plates of adjacent links by means of two respective articulation pivots 37-38 that are transverse to the chain (clearly shown in figure 3).

The chain has a roller and/or bush structure. In the embodiment shown in the figure the chain is of the bush and roller type, formed by an alternating sequence of links 40 with near internal plates and links 41 with far external plates. In the section in figure 4 there is clearly visible the pair of plates 32, 35 of a link 41 with external plates and the pair of plates 33, 34 of a link 40 with internal plates. According to the prior art, rollers 36 are fitted on the pivots 37, 38 and on the bushes of the chain.

The chain has on one side a series of grasping pivots 12, each of which comprises a fixed part 13 which is integral with the chain and a movable part 14, supported by the fixed part 13.

The fixed part 13 of the pivot comprises a jaw 18 and a pair of side arms 15 that protrude laterally as one piece from a plate of a link of the chain, advantageously from the plate 35 of a link 41 with external plates.

Between the side arms 15 the movable part 14 of the pivot is received, which is generally shaped as an upturned U, with the arms 16 of the U that extend below towards the central axis to define two side cam surfaces 17 that protrude below the pivot.

The arms 16 of the U are arranged facing the side arms 15 of the fixed part with minimum clearance and are slidably coupled on a pad therewith to enable the fixed part to become raised and lowered compared with the movable part according to a set trajectory. The fixed jaw 18 protrudes as a bracket above the external plate 35; the movable part 14 defines a complementary movable jaw 19 that is arranged above the fixed jaw 18.

As can be seen from the figure 1, the sliding coupling between the jaws is obtained by means of a pair of guiding grooves or notches 20 made in the two side arms 16 of the movable part 14 and which are engaged by sliding surfaces protruding from the side arms 15 of the fixed part. The sliding surfaces are advantageously made from a pivot 21 for each notch 20. The pivots 21 are made with an indentation, or draw, in the wall of the respective arm 15.

In order to maintain the pivot normally shut a spring 23 is provided that pushes between the upper bracket 18 of the fixed part of the pivot and the lower part of the movable part. In order to maintain the spring in position, the upper bracket is shaped as a draw 24 directed downwards (see figure 3) and the two lower ends 25 of the movable part are correspondingly folded upwards to the centre of the pivot (figure 1). The spring engages between the draw 24 and the ends 25. The draw 24 may have a hole 30 in which a guiding pivot runs protruding from the lower surface of the movable jaw 19.

In order to open the pivot automatically, along the path of the chain there are provided driving surfaces 26 (shown in figure 2) intended for pushing up on the cam surfaces 17 of the movable part. Advantageously, the driving surfaces 26 can be formed of suitable pulleys 27 and be coaxial to idling wheels 28 of the chain. In this way, when the chain rotates around the wheel the pivots open and close automatically, releasing or grasping the sheet material (for example a film made of plastics).

It is understood that the conveying device for conveying the sheet material can comprise a series of idling and dragging wheels for dragging the chain and driving surfaces arranged in various ways along the sliding path of the chain, according to any prior art of the industry.

An additional plate 31 is arranged alongside the plate 35 so as to connect the two transverse pivots 37 and 38 of the link 41 that bears the pivot, i.e. the two pivots that engage the plate 35. Advantageously, the plate 31 is positioned on the face of the plate 35 facing the inside of the chain, interposed between the internal plates 34 of the adjacent links 40 and the plate 35. Adding the plate 31 enables a high yield stress load of the chain to be obtained even with materials that are highly resistant to corrosion, unlike the traditional hardened steels used in the prior art.

It is particularly advantageous o make the links of the chain and the additional plate 31 of austenitic steel, preferably series AISI 300 austenitic stainless steel. The use of this material enables resistance to corrosion to be increased. The flat plates of the links 32-34 and the additional plate 31 are made of a greatly hardened steel in order to have satisfactory mechanical resistance.

The plate 35 and fixed part 13, 15, 18 of the pivot are made of a single piece obtained from stainless steel in a solubilised state to increase the deformability thereof at the cost of mechanical resistance and of the maximum yield stress. The material that has been made deformable can be processed to shape the piece and, in particular to form the arms 15 provided with the guiding draws 21 intended to be engaged in the notches 20 of the movable part of the pivot. -After the piece has been shaped, the piece is hardened to ensure that the draws 21 resist wear.

The presence of the plate 31 enables the reduced yield stress load of the plate 35 compared with pivot holders made from traditional steels to be compensated. The plate 31 works in tandem with the plates 32, 35 and balances the resisting surfaces thereof, increasing the breaking and yield stress loads thereof.

The particular design of the link enables great corrosion distance to be obtained (owing to the possibility of using steel that is not heat-treated, such as AISI 300 austenitic stainless steel or the like), maintaining sufficient mechanical resistance to support the great traction stress to which the chain is subjected during operation.

At this point it is obvious how the objects of the present invention have been achieved.

In particular, a chain is provided for conveying sheet material, in particular for a heat-forming machine, provided with great mechanical resistance and at the same time with great and satisfactory resistance to corrosion.

Further, a chain having links with a simple structure is provided that is manufacturable in an economical and cheap manner.

Naturally, the above disclosure of an embodiment applying the innovative principles of the present invention is given by way of example and must not therefore be taken to limit the scope of what is claimed herein.

## Claims

1. Chain for conveying sheet material comprising a sequence of chain links each formed of a pair of parallel plates (32-35) connected to the subsequent and preceding links by two respective transverse articulation pivots (37, 38), the chain comprising laterally grasping pivots (12), each having a fixed part (13), which is integral with the chain, and a movable part (14) that is supported on the fixed part and is provided with cam surfaces (17) intended for sliding on corresponding driving surfaces (26) arranged along the path of the chain to open the pivots against the action of spring means (23) that maintains the pivot in a normally shut position, the fixed part (13) of the pivot comprising a fixed jaw (18) and a pair of lateral guiding arms (15), between the lateral guiding arms (15) and the movable part (14) being provided mutual engaging means (20, 21) that sets preset movement of the movable part (14) compared with the fixed part (13), said fixed jaw (18) and said guiding arms (15) of the fixed part of the pivot protruding as one piece laterally from one of the two plates (35) of a chain link, **characterised in that** it comprises an additional plate (31) next to each plate (35) from which a fixed jaw and guiding jaws of the pivot protrude, the additional plate (31) connecting the two transverse articulation pivots (37, 38) of the plate (35) alongside which it is placed.

2. Chain according to claim 1, **characterised in that** the links (40, 41) of the chain are made of austenitic steel.

3. Chain according to claim 1, **characterised in that** the additional plates (31) are made of austenitic steel.

4. Chain according to claim 1, **characterised in that** the flat plates of the links (32-34) and the additional plates (31) are made of greatly hardened steel.

5. Chain according to claim 1, **characterised in that** the chain comprises an alternating sequence of links with internal near-side plates (33, 34) and with links with external far-side plates (32, 35).

6. Chain according to claim 5, **characterised in that** the plates (35) from which the fixed part of the pivots (13) protrudes as one piece are external plates in a link (41) with far-side plates.

7. Chain according to claim 6, **characterised in that** the additional plate (31) is arranged placed alongside the plate (35) that bears the pivot (12) on the side facing inside the chain.

8. Chain according to claim 1, **characterised in that** the chain is of the bush and/or roller type.

9. Chain according to claim 1, **characterised in that** the mutual engaging means comprises a notch (20) and corresponding engaging and sliding surfaces (21, 22) in said notch, arranged on front surfaces of respectively the side arms (15) of the movable part and of the movable part.

10. Chain according to claim 9, **characterised in that** for each notch (20) the engaging surfaces are defined by a draw (21) formed on the guiding arm (15) of the fixed part of the pivot.

11. Chain according to claim 1, **characterised in that** said generally U-shaped movable part (14) has side arms (16) of the U received with minimum clearance on said side arms (15) of the fixed part, the closing thrust spring (23) of the pivot being housed between the arms of the U to push the respective ends (25) away from the fixed jaw (18) of the pivot.

12. Sheet material conveying device, comprising a conveying chain (11) according to any preceding claim, chain driving and dragging (28) means and driving surfaces (26) arranged along the route of the chain to open the pivots in preset positions along the path against the action of the spring means (23) engaging with the corresponding cam surfaces (17) of the movable parts of the pivots.

13. Method for manufacturing a chain for conveying sheet material according to any one of claims 1 to 11, in which the plate (35) of the link from which there protrudes the side arms (15) and the fixed jaw (18) of the pivot as one piece is obtained by initially providing a piece made of stainless steel in solubilised state with high deformability, processing said steel piece in solubilised state to form the lateral guiding arms (15) with the corresponding engaging means (21) and hardening the thus processed piece to increase the mechanical resistance thereof.
